# EUROPÄISCHE PATENTANMELDUNG

(11) **EP 2 520 347 A1**
(43) Veröffentlichungstag der Anmeldung: **07.11.2012**
(21) Anmeldenummer: 11164467.0
(22) Anmeldetag: 02.05.2011
(51) Int. Cl.: B01D 21/00, B01D 21/24, C02F 3/12

(54) **Kläranlage mit Lamellenabscheider bei Klarwasserauslauf**

(71) Anmelder: Otto Graf GmbH Kunststofferzeugnisse, 79331 Teningen (DE)
(72) Erfinder: Graf, Otto P., 79331, Teningen (DE)
(74) Vertreter: Grünecker, Kinkeldey, Stockmair & Schwanhäusser

(57) **Zusammenfassung**

In einer Kläranlage (K) mit einer Vorklärkammer (3) und wenigstens einer Belebungskammer (4), in welcher einem Klarwasserauslauf (7) ein oben und unten offenes Abscheidegehäuse (G) nach Art eines Steigrohres mit unterem Einlauf (13) zugeordnet ist, ist das Abscheidegehäuse ein in mehrere Schächte (15) unterteilter Lamellenabscheider (L), dessen Schächte (15) gegenüber der Vertikalen unter einem Winkel (α) schräg geneigt sind.

## Beschreibung

Die Erfindung betrifft eine Kläranlage der im Oberbegriff des Patentanspruchs 1 angegebenen Art.

Bei einer aus EP 1 559 686 A bekannten Kläranlage sind der Vorklärkammer zwei nacheinander durchströmte Belebungskammern nachgeschaltet. In der in Strömungsrichtung letzten Belebungskammer ist der Klarwasserauslauf platziert, dem das Abscheidegehäuse nach Art eines Steigrohres zugeordnet ist. Das Abscheidegehäuse weist am unteren Ende als Boden eine schräg geneigte Rutschfläche auf, deren unterer Rand einen unteren Rand einer seitlich im Abscheidegehäuse platzierten Einlauföffnung begrenzt. Das Abscheidegehäuse hat oberhalb der Rutschfläche konstanten Querschnitt und ist exakt vertikal angeordnet. Zweck des Abscheidegehäuses ist es, Belebtschlamm abzuscheiden und auf den Boden der Belebungskammer zu leiten, in welcher separiert von dem Abscheidegehäuse wenigstens eine Belüftungseinrichtung angeordnet ist.

Weiterer Stand der Technik ist zu finden in EP 2 156 872 A, EP 2 100 651 A und DE 298 05 781 U.

Konventionelle Kläranlagen, die nach dem Belebtschlammverfahren betrieben werden, weisen im Regelfall drei Kammern auf. In einer Vorklärkammer erfolgt eine mechanische Vorreinigung durch Sedimentation und Flotation. Vorgereinigtes Abwasser tritt aus der Vorklärkammer in die Belebungskammer ein, in welchem eine biologische Reinigung mit Belebtschlamm durchgeführt wird. Aus der Belebungskammer tritt Klärschlamm mit vorgereinigtem Abwasser in die nachfolgende Nachklärkammer ein, in der eine Trennung des Klärschlamms von dem Abwasser stattfindet und Klarwasser über den Auslauf abgeführt wird. Abgeschiedener Klärschlamm wird aus der Nachklärkammer wieder in die Vorklärkammer zurückgeführt. Die biologische Reinigung in der Belebungskammer läuft mit Bakterien und Kleinstlebewesen ab, die frei im Kammerinhalt schweben und unter Zugabe von Luftsauerstoff die Schmutzfracht im Kammerinhalt abbauen. Die Bakterien bilden eine Flockenstruktur (Belebtschlammflocken oder Klärschlamm) und setzen sich ab, falls eine ausreichende Strömungsberuhigung gegeben ist. Aus der Belebungskammer fließt ein Gemisch aus Wasser und Klärschlamm in die Nachklärkammer, in welcher biologisch gereinigtes Wasser und Klärschlamm getrennt werden. Durch die Größe und Geometrie der Nachklärkammer wird die Strömungsgeschwindigkeit so weit verringert, dass die Belebtschlammflocken sedimentieren und sich im oberen Bereich der Nachklärkammer eine Klarwasserzone bildet, aus der das Klarwasser abgezogen wird. Der Klärschlamm wird aus der Nachklärkammer wieder in die Belebungskammer gepumpt, wo er wieder zur biologischen Reinigung verfügbar ist. Da ein kontinuierliches Wachstum der entstehenden Biomasse stattfindet, muss regelmäßig ein Teil des Klärschlamms aus der Kleinkläranlage entfernt werden. Mit diesen konventionellen Kläranlagen, meist Kleinkläranlagen, die nach dem Belebtschlammverfahren betrieben werden, sind einige Nachteile verbunden:
Zur Biomassenseparation wird die separate Nachklärkammer benötigt.

Der Belebtschlamm muss unter Energieaufwand in die Belebungskammer gefördert werden.

Die Kläranlage ist anfällig gegenüber hydraulischen Stoßbelastungen, da diese zum Abtrieb von Klärschlamm führen können.

In der Abwassertechnik ist es für Kläranlagen, die nach dem Belebtschlammverfahren betrieben werden, bereits bekannt, Lamellenabscheider einzusetzen. Der jeweilige Lamellenabscheider ist in der Belebungskammer installiert, um einerseits die Leistungsfähigkeit in der Belebungskammer zu erhöhen, andererseits einen erheblichen Teil des Belebtschlamms oder Klärschlamms in der Belebungskammer zurückzuhalten und am Übertritt in die Nachklärkammer zu ändern. Auf diese Weise werden höhere Schlammkonzentrationen ermöglicht. Die Nachklärkammer ist jedoch nach wie vor erforderlich.

Der Erfindung liegt die Aufgabe zugrunde, eine Kläranlage mit erhöhtem Wirkungsgrad zu schaffen. Teil der Aufgabenstellung ist es ferner, eine separate Nachklärkammer einzusparen und gegebenenfalls eine Schlammrückführung unterlassen zu können.

Die gestellte Aufgabe wird mit den Merkmalen des Patentanspruchs 1 gelöst.

Dank des wenigstens einen Lamellenabscheiders und der gegenüber der Vertikalen schräg geneigten Schächte wird ein hoher Wirkungsgrad bei der Abscheidung des Klärschlamms und der Freisetzung des Klarwassers erzielt, da die schräg geneigten Schächte die Sinkwege der Partikel des Klärschlamms verkürzen, diesen große Oberflächen zum Absetzen anbieten, und die abgesetzten Partikel aufgrund der Schräglage fortwährend nach unten und zurück in die Belebungskammer rutschen. Aufgrund der Schrägstellung separieren sich die mit dem Klarwasser aufsteigenden Feststoffteilchen vom Klarwasser in Richtung zu den Schachtwänden, an denen sie gegen weiteres Aufsteigen festgehalten und beim Absetzen gesammelt werden, ehe sie unter Schwerkrafteinfluss nach unten rutschen. Die Strömung in den Schächten ist turbulenzarm und beruhigt, so dass der Reinheitsgrad des Klarwassers in Aufsteigerichtung relativ rasch zunimmt. Dank des hohen Wirkungsgrades des Lamellenabscheiders kann sogar auf eine nachfolgende Nachklärung bzw. eine Nachklärkammer verzichtet werden. Hydraulische Überbelastungen werden durch einen gedrosselten Auslauf vermieden. Zur Aufnahme von Stoßbelastungen wird in der Belebungskammer ein ausreichendes Puffervolumen zur Verfügung gehalten. Aus der Belüftung in der Belebungskammer gelangen nahezu überhaupt keine Turbulenzen in den Lamellenabscheider. Der Lamellenabscheider ist mit seiner Lamellengeometrie nicht nur effizient sondern auch so ausgelegt, dass die Wasser-Aufströmgeschwindigkeit geringer bleibt als die Sinkgeschwindigkeit der Belebtschlammpartikel. Grundsätzlich findet die Abtrennung der Biomasse nicht wie bisher in einer Nachklärkammer statt, sondern in dem Lamellenabscheider, der mit schrägen Schächten direkt in die den Auslauf aufweisende Belebungskammer installiert ist. Dieses Prinzip ist besonders für Kleinkläranlagen zweckmäßig.

Bei einer zweckmäßigen Ausführungsform sind zumindest zwei einander gegenüberliegende Schachtwände gegenüber der Vertikalen schräg geneigt. Entlang der jeweils oberen Schachtwand wird das Wasser nach oben geleitet, während sich die Feststoffpartikel auf der unteren Schachtwand absetzen und ihr entlang nach unten rutschen. Diese Anordnung soll jedoch nicht ausschließen, insgesamt die Schächte windschief im Raum so anzuordnen, dass gleichzeitig zwei aneinander angrenzende Schachtwände schräg geneigt sind, so dass das aufsteigende Wasser entlang zweier Schachtwände hochsteigen und gleichzeitig die Feststoffpartikel entlang zwei einander angrenzender Schachtwände nach unten rutschen.

Der Neigungswinkel wird u.a. abhängig von der Gleitfähigkeit der Feststoffpartikel an der jeweiligen Schachtwand gewählt, um den Wirkungsgrad der Abscheidung so optimieren, und liegt beispielsweise zwischen etwa 5° und 55° gegenüber der Vertikalen.

In einer baulich einfachen und zweckmäßigen Ausführungsform hat jeder Schacht eines z.B. rechteckigen Lamellenabscheiders einen annähernd rechteckigen Querschnitt mit einem Verhältnis von etwa 1 : 4 zwischen der in Horizontalrichtung gemessenen Breite und Länge der Schachtwände, und kann die Aufsteiglänge in den Schächten hier zur Länge einer Schachtwand bei dem rechteckigen Lamellenabscheider in einem Verhältnis von etwa 2 : 1 bis 4 : 1 stehen. Die Geometrie der Schachtquerschnitte ist grundsätzlich und beispielsweise auch im Hinblick auf die Steifigkeit des Lamellenabscheiders variierbar. So können die Schächte etwa doppelt konische Querschnitte und die längeren Schachtwände stabile Wurzelbereiche haben. Dies kann formtechnische Vorteile bieten, wenn der Lamellenabscheider z.B. als Kunststoffformteil ausgebildet ist.

Im Übrigen kann es zweckmäßig sein, wenn trotz der Schrägstellung der Schächte die oberen und unteren Enden der Schächte jeweils in einer gemeinsamen Horizontalebene liegen. Auf diese Weise wirken alle Schächte bei der Abscheidung des Schlamms und der Wasser-Aufstiegsführung in Bezug auf den Auslauf auf gleiche Weise.

Zweckmäßig ist optional am Abscheidegehäuse des Lamellenabscheiders wenigstens eine Rutschfläche z.B. mit etwa 45° gegenüber der Vertikalen geneigt vorgesehen. Diese begrenzt mit einer Längsseite den Einlauf von oben. Somit ist der Einlauf zur Gänze unterhalb der Rutschfläche platziert. Die Rutschfläche erfüllt nicht nur die Funktion einer Querschnittsbegrenzung des gegenüber dem Querschnitt im Lamellenabscheider reduzierten Einlaufes, sondern lenkt abrutschende Feststoffpartikel oder Klärschlamm gezielt beispielsweise zu einem Bodenbereich der Belebungskammer, der z.B. einer darin angeordneten Belüftungseinrichtung abgewandt ist, in deren Bereich eine intensivere Verwirbelung stattfinden könnte. Der Einlauf kann als Option einen Querschnitt aufweisen, der kleiner ist als etwa die Hälfte des Querschnitts des Lamellenabscheiders in den Schächten. Dies begünstigt eine die Abscheidewirkung steigernde Strömungsberuhigung im Lamellenabscheider und stellt u.a. sicher, in Abstimmung auf den Querschnitt des Auslaufs, dass die Aufströmgeschwindigkeit des Wassers geringer ist als die Sinkgeschwindigkeit der Belebtschlammpartikel. Diese Geometrie des Lamellenabscheiders resultiert auch darin, dass sich der aufsteigende Abwasserstrom möglichst gleichmäßig auf die Schächte verteilt und darin beruhigt wird.

Bei einer weiteren Ausführungsform ist die Rutschfläche an einer längeren Seite des Querschnitts des Lamellenabscheiders angeordnet, an die kürzere, beispielsweise exakt vertikal orientierte, Schachtwände, beispielsweise eines im Querschnitt rechteckigen Lamellenabscheiders, angrenzen. Die über den Einlauf eintretende Strömung beruhigt sich entlang der Rutschfläche und verteilt sich auf alle Schächte. Herabrutschender Klärschlamm wird aus einigen Schachtbereichen entlang der Rutschfläche gezielt dirigiert. Auch an den vertikalen Schachtwänden setzt sich Klärschlamm ab, der dann nach unten gleitet.

Der Lamellenabscheider könnte alternativ einen runden oder ovalen Querschnitt aufweisen. Der Querschnitt kann in etwa konstant sein oder nach oben oder unten zunehmen. Die Schächte können untereinander unterschiedliche Querschnitte und/oder Querschnittsformen aufweisen. Die Schachtquerschnitte können in etwa konstant sein oder nach oben oder unten zunehmen (sich verjüngende Schächte).

Zweckmäßig ist der Lamellenabscheider ein Kunststoffformteil und entweder einstückig ausgebildet, oder aus z.B. zwei gefügten Schalen, die beispielsweise in einer Fügeebene gefügt sind, die in etwa parallel zu den Schächten verläuft. Dies kann herstellungs- und formentechnische Vorteile bieten.

In einer günstigen Ausführungsform weist die Kläranlage einen Behälter auf, z.B. einen annähernd zylindrischen Kunststoffbehälter, beispielsweise mit nach außen bombierten Endwänden, der liegend installiert wird. Der Behälter wird durch eine in etwa senkrechte Trennwand mit oberseitiger Überlaufschwelle in nur zwei Kammern unterteilt ist, nämlich in die Vorklärkammer und die einzige Belebungskammer. Der Lamellenabscheider (mindestens einer in der Belebungskammer) ist in der Belebungskammer z.B. an oder nahe der Trennwand installiert. Dabei ist in der Belebungskammer im Bodenbereich und in Querrichtung beabstandet vom Lamellenabscheider oder dem Einlauf des Lamellenabscheiders wenigstens eine Belüftungseinrichtung installiert, die an der dem Einlauf abgewandten Seite der Rutschfläche positioniert sein kann. Vorzugsweise ist der Einlauf des Lamellenabscheiders sogar höher positioniert als die Belüftungseinrichtung, so dass unterhalb des Lamellenabscheiders möglichst viel Klärschlamm gesammelt werden kann, ohne die Abscheidefunktion zu beeinträchtigen. Andere Behälterformen und/oder -materialien sind ebenfalls möglich.

Zweckmäßig liegt das obere Ende des Lamellenabscheiders, das sich über die oberen Enden der Schächte hinaus erstreckt, etwa auf oder geringfügig unterhalb der Höhe der Überlaufschwelle zwischen den beiden Kammern.

Ferner ist es zweckmäßig, wenn das Volumen der Belebungskammer ein Mehrfaches des Volumens des Lamellenabscheiders ist, so dass ein großes Pufferungsvolumen in der Belebungskammer zur Verfügung steht, das stoßartige Belastungen an zulaufendem Abwasser kompensiert, wobei auch der Überstand des oberen Endes des Lamellenabscheiders über den Auslauf zu dieser Sicherheitsfunktion beiträgt.

Das obere Ende des Lamellenabscheiders, das, vorzugsweise, von einem vertikalen Rohrabschnitt des Lamellenabscheiders mit konstantem Querschnitt definiert wird, liegt oberhalb einer im Lamellenabscheider angeordneten Mündung des Auslaufs, vorzugsweise, mit einem Höhenabstand etwa entsprechend der zweifachen Breite einer kürzeren Schachtwand. In einer konkreten Ausführungsform kann der Lamellenabscheider beispielsweise sechs gleich große Schächte mit zumindest im Wesentlichen ebenen Schachtwänden aufweisen.

Anhand der Zeichnungen werden Ausführungsformen des Erfindungsgegenstandes erläutert. Es zeigen:
- Fig. 1: einen schematischen Vertikalschnitt einer Kläranlage,
- Fig. 2: eine Seitenansicht eines in der Kläranlage installierbaren Lamellenabscheiders,
- Fig. 3: eine Draufsicht des Lamellenabscheiders,
- Fig. 4: eine Teilschnittansicht des Lamellenabscheiders zur Verdeutlichung von Strömungsverhältnissen, und
- Fig. 5: eine Perspektiv-Schnittdarstellung einer konkreten Ausführungsform der Kläranlage.

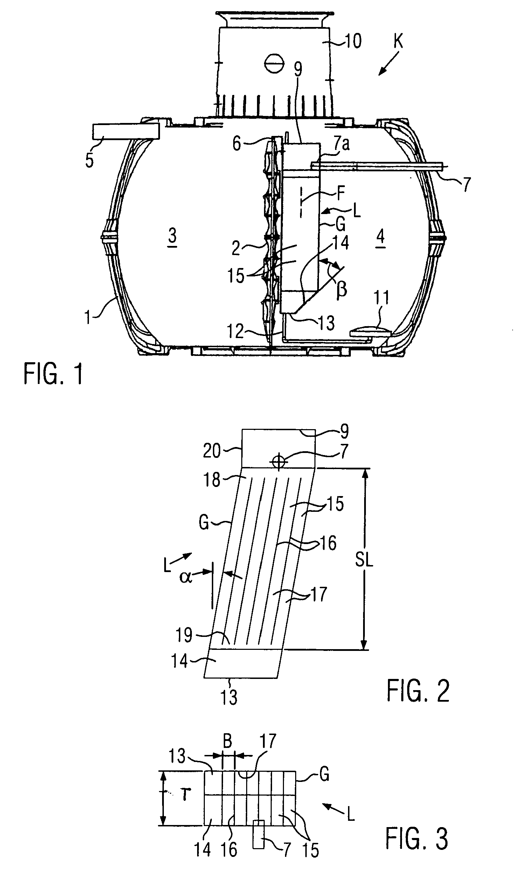

Eine in Fig. 1 in Betriebsposition angedeutete Kläranlage, insbesondere eine Kleinkläranlage K, weist beispielsweise einen aus Kunststoff geformten Behälter 1 annähernd zylindrischer Gestalt mit nach außen bombierten Endkappen und liegender Zylinderachse auf, der durch eine in etwa senkrecht zur Zylinderachse eingeformte oder eingesetzte, verrippte Trennwand 2 in eine Vorklärkammer 3 und eine in etwa mit gleichem Volumen wie die Vorklärkammer 3 ausgebildete Belebungskammer 4 unterteilt ist. Wenigstens ein Zulauf 5 mündet oben in die Vorklärkammer 3. Die Trennwand 2 definiert zwischen der Vorklärkammer 3 und der Belebungskammer 4 eine Überlaufschwelle 6 etwa auf der Höhe der Unterkante des Zulaufes 5. Aus der Belebungskammer 4 erstreckt sich unterhalb der Höhenposition der Überlaufschwelle 6 ein Auslauf 7 für Klarwasser nach außen, beispielsweise ein gerades horizontal oder mit leichtem Gefälle installiertes Rohr, das in einem beispielsweise an der Trennwand 2 installierten Lamellenabscheider L eine Mündung 7a besitzt, die beispielsweise gedrosselt ist.

Der Behälter 1 könnte alternativ ein stehender Zylinder oder ein rechteckiger oder im Querschnitt beliebig an die Klärfunktion angepasster Behälter sein, auch aus Beton oder Blech, oder dgl..

Der Lamellenabscheider L weist in Fig. 1 beispielsweise ein im Querschnitt rechteckiges Abscheidegehäuse G auf (es kann auch eine ovale oder runde Querschnittsform gewählt werden) und erstreckt sich in der Darstellung in Fig. 1 vertikal. Der Lamellenabscheider L ist zweckmäßig ein Kunststoffformteil und entweder einstückig ausgebildet oder aus beispielsweise zwei Schalen gefügt, z.B. in einer strichpunktiert angedeuteten Fügeebene F. Der Lamellenabscheider L weist z.B. unterhalb eines Behälterdoms 10 ein oberes, offenes Ende 9 knapp unterhalb der Höhenposition der Überlaufschwelle 6 auf. In der Belebungskammer 4 ist seitlich versetzt gegenüber dem Lamellenabscheider im Bodenbereich wenigstens eine Belüftungseinrichtung 11 installiert, die über eine beispielsweise durch den Behälterdom 10 mit Druckluft versorgbare Leitung 12 betreibbar ist.

Am unteren, im Abstand oberhalb des Bodens der Belebungskammer 4 positionierten Ende des hier mit rechteckigem Querschnitt ausgebildeten Lamellenabscheiders L ist ein in etwa horizontaler, offener Einlauf 13 z.B. mit einem Querschnitt etwa kleiner als die Hälfte des Querschnitts des Lamellenabscheiders L angeordnet, der beispielsweise rechteckig ist, und an einer längeren Rechteckseite optional von einer Unterkante einer schräg aufwärts geneigten Rutschfläche 14 begrenzt wird, die an dem Lamellenabscheider L in dessen einer Außenwand geformt ist. Der Neigungswinkel β der Rutschfläche 14 liegt bei beispielsweise etwa 45° gegenüber der Vertikalen, kann aber auch größer oder kleiner sein. Der Lamellenabscheider L ist innenseitig in mehrere z.B. zueinander parallele, z.B. untereinander gleiche Querschnitte aufweisende, Schächte 15 unterteilt, die sich annähernd vom Niveau des oberen Endes der Rutschfläche 14 über eine Aufsteiglänge nach oben bis unterhalb der Mündung 7a des Auslaufes 7 erstrecken.

Die Rutschfläche 14 ist nur eine Option. Sie könnte weggelassen werden, so dass der Einlauf 13 im Querschnitt annähernd dem Querschnitt des Abscheidegehäuses G entspräche.

In den Fig. 2 und 3 wird eine mögliche Ausführungsform des Lamellenabscheiders L schematisch in einer Seitenansicht und einer Draufsicht gezeigt. Die Schächte 15 erstrecken sich unter einem Winkel α schräg gegenüber der Vertikalen. Der Winkel α kann zwischen etwa 5° und 20° betragen. Jeder Schacht 15 wird durch zwei einander gegenüberliegende lange Schachtwände 16 (Lamellen) und zwei dazu beispielsweise senkrechte kurze Schachtwände 17 begrenzt, die sämtliche im Wesentlichen eben sind und zu oberen und unteren Schachtenden 18, 19 führen, die jeweils in einer gemeinsamen horizontalen Ebene liegen können. In der gezeigten Ausführungsform sind die längeren Schachtwände 16 (Länge T) unter dem Winkel α schräg geneigt, während die kürzeren Schachtwände 17 (Breite B) vertikal orientiert sind. Die schrägen Schächte 15 werden z.B. durch eine schräge Installation des Lamellenabscheiders L in der Belebungskammer 4 erhalten, und/oder sind (nicht gezeigt) bereits im Abscheidegehäuse G schräggestellt angeordnet.

Bei einer alternativen, nicht gezeigten Ausführungsform könnte der Lamellenabscheider L der Fig. 2 und 3 insgesamt windschief installiert sein, so dass auch die kürzeren Schachtwände 17 schräg gegenüber der Vertikalen geneigt sind. Das Verhältnis der Breite B zur Länge T kann etwa 1 : 4 betragen. Die in Fig. 2 angedeutete Aufsteiglänge SL der Schächte 15 kann zur Länge T in einem Verhältnis von etwa 3 : 1 stehen. Die Mündung 7a des Auslaufes 7 liegt beispielsweise in etwa mittig oberhalb zweier mittlerer Schächte 15. Fig. 3 deutet auch den Querschnitt des Einlaufs 13 im Verhältnis zur Rutschfläche 14 an. Ein oberer Endabschnitt 20 des Abscheidegehäuses G verläuft mit konstantem Querschnitt beispielsweise vertikal bis zum oberen Ende 9 des Lamellenabscheiders L. Der Höhenabstand zwischen dem Auslauf 7 und dem oberen Ende 9 des Lamellenabscheiders L entspricht annähernd der zweifachen Breite B.

Der Lamellenabscheider L bzw. das Abscheidegehäuse G könnte alternativ einen runden oder ovalen Querschnitt haben. Auch könnten die Schächte 15 untereinander unterschiedliche Querschnitte und/oder Querschnittsformen aufweisen. Die Schachtquerschnitte können in Längsrichtung des Lamellenabscheiders L in etwa konstant bleiben oder variieren (sich nach oben oder nach unten verjüngende Schächte 15, nicht gezeigt). Auch ein im Querschnitt nach oben oder unten zunehmender Lamellenabscheider L könnte verwendet werden.

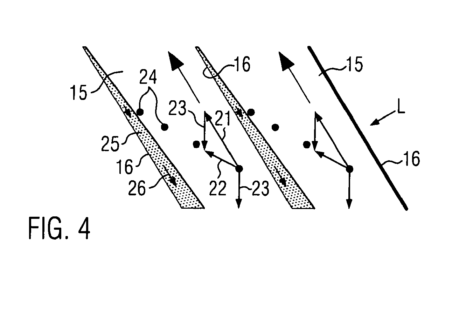

Fig. 4 verdeutlicht, wie im Betrieb der Kläranlage K die Mischung aus Schmutzwasser/Klarwasser oder Reinwasser mit darin enthaltenen Feststoffteilchen im Lamellenabscheider L z.B. der Fig. 1 bis 3 in Richtung der zu den Schachtwänden 16 in etwa parallelen Pfeile 21 beruhigt nach oben steigt, wobei Schwerkrafteinfluss (Kraftvektorpfeile 23) die Feststoffteilchen 24 in Richtung der Kraftvektorpfeile 22 zur einen Schachtwand 16 umlenkt. Die Feststoffteilchen sammeln sich als Schlamm 25 an der in Richtung des Kraftvektorpfeils 23 unteren Schachtwand 16, wobei dort eine Schlammschicht entsteht, die in Richtung nach unten dicker wird und in Richtung des Pfeils 16 nach unten rutscht. Der Klärschlamm fällt durch den Einlauf 13 nach unten und kann von der Rutschfläche 14 in Richtung zur Trennwand 2 (Fig. 1) umgelenkt werden, falls diese vorgesehen ist.

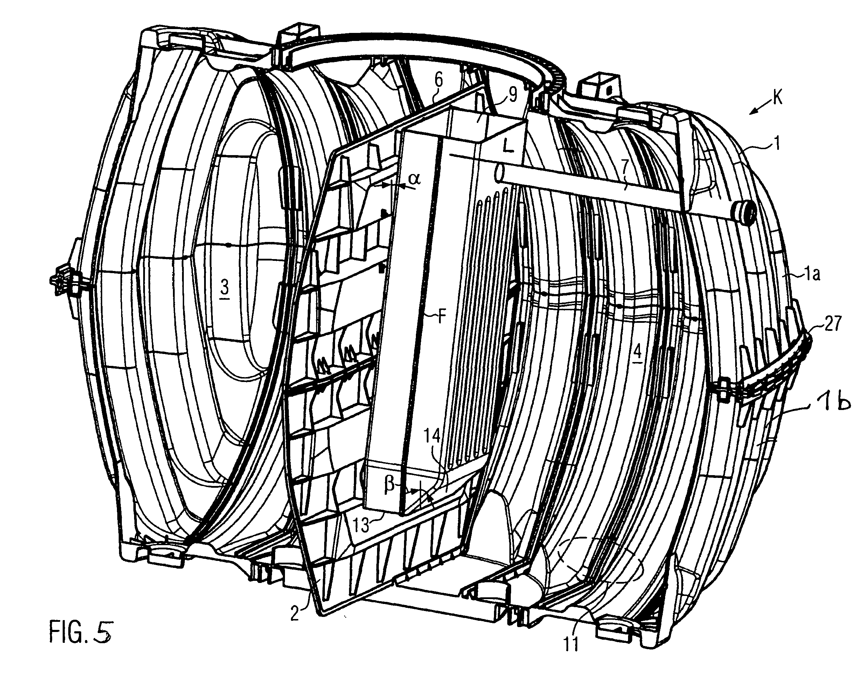

In der Schnittdarstellung von Fig. 5 ist die Verrippung des Behälters 1 und der Trennwand 2 erkennbar, an der der mit dem Winkel α schräg gestellte, hier rechteckige Lamellenabscheider L installiert ist, damit die Schächte 15 die nötige Schräge haben, wobei das obere Ende 9 unterhalb der Überlaufschwelle 6 platziert ist. Das Volumen der Belebungskammer 4 beträgt ein Vielfaches oder Mehrfaches des Volumens des Lamellenabscheiders L, von dem sich der Auslauf 7 ausgehend durch eine nach außen bombierte Endkappe des Behälters 1 nach außen erstreckt. Der Behälter 1 ist beispielsweise aus zwei schalenförmigen Hälften 1 a, 1 b gefügt, die über Verbindungseinrichtungen 27 miteinander dicht verspannt sind. Der Einlauf 13 des Lamellenabscheiders L liegt benachbart zur Trennwand 2 und an der der Belüftungseinrichtung 11 abgewandten Seite der Rutschfläche 14 und so hoch über dem Boden der Belebungskammer 4, dass dort genügend Raum zum Absetzen von aus dem Lamellenabscheider L abgeschiedenem Klärschlamm nutzbar ist.

Der Lamellenabscheider L könnte auch aus Blech gefertigt sein und in die Belebungskammer 4 eines anders ausgebildeten Behälters 1, z.B. eines betonierten Behälters oder eines Blechbehälters, z.B. mit der Form eines stehenden Zylinders oder eines Rechteckbehälters, installiert werden. Fig. 5 verdeutlicht auch die Fügeebene F des hier aus zwei schalenförmigen Teilen gefügten Lamellenabscheiders L. Ferner könnten in der Belebungskammer 4 mehr als ein Lamellenabscheider L oder könnte ein breiterer als der gezeigte installiert werden. Ferner bräuchte der Lamellenabscheider L nicht schräg installiert zu werden, falls die Schächte 15 im Abscheidegehäuse G relativ zu dessen Wänden bereits schräg verlaufen.

## Patentansprüche

1. Kläranlage, insbesondere Kleinkläranlage (K), mit einer Vorklärkammer (3) und wenigstens einer Belebungskammer (4), in der einem Klarwasserauslauf (7) wenigstens ein oben und unten offenes Abscheidegehäuse (G) nach Art eines Steigrohres mit untenliegendem Einlauf (13) zugeordnet ist, **dadurch gekennzeichnet, dass** das Abscheidegehäuse (G) ein in mehrere separate Schächte (15) unterteilter Lamellenabscheider (L) ist, und dass die Schächte (15) in der Belebungskammer (4) gegenüber der Vertikalen unter einem Winkel (α) schräg geneigt sind.

2. Kläranlage nach Anspruch 1, **dadurch gekennzeichnet, dass** in jedem Schacht (15) zumindest zwei einander gegenüberliegende Schachtwände (16) schräg geneigt sind.

3. Kläranlage nach Anspruch 1, **dadurch gekennzeichnet, dass** die Schächte (15) untereinander in etwa gleiche Aufsteiglängen (SL) und Querschnitte aufweisen und zueinander parallel sind, in gemeinsamen Horizontalebenen liegende obere und untere Schachtenden (18, 19) besitzen, und sich im Lamellenabscheider (L) von unterhalb des Auslaufs (7) nach unten bis etwa zum Einlauf (13) mit konstanten Querschnitten erstrecken.

4. Kläranlage nach Anspruch 1, **dadurch gekennzeichnet, dass** die Schächte (15) untereinander unterschiedliche Querschnittsformen und/oder Querschnitte aufweisen, die in Längsrichtung des Lamellenabscheiders (L) entweder im Wesentlichen konstant sind oder in sich verjüngenden Schächten (15) zu- oder abnehmen.

5. Kläranlage nach Anspruch 1, **dadurch gekennzeichnet, dass** der Neigungswinkel (α) gegenüber der Vertikalen zwischen etwa 5° und 55° beträgt.

6. Kläranlage nach Anspruch 1, **dadurch gekennzeichnet, dass** der Lamellenabscheider (L) einen rechteckigen, vorzugsweise in etwa konstanten, Querschnitt aufweist, dass jeder Schacht (15) einen annähernd rechteckigen Querschnitt mit einem Verhältnis von etwa 1 : 4 zwischen der Breite (B) und der Länge (T) seiner Schachtwände (16, 17) aufweist, und dass die Aufsteiglänge (SL) zur Länge (T) in einem Verhältnis von etwa 2 : 1 bis 4 : 1 steht.

7. Kläranlage nach Anspruch 6, **dadurch gekennzeichnet, dass** die längeren Schachtwände (16) unter dem Winkel (α) schräg geneigt sind, und die kürzeren Schachtwände (17) in etwa vertikal verlaufen.

8. Kläranlage nach Anspruch 1, **dadurch gekennzeichnet, dass** am Abscheidegehäuse (G) eine schräge, den Einlauf (13) von oben her begrenzende Rutschfläche (14) angeordnet ist, vorzugsweise, an einer längeren Seite des Rechteck-Querschnitts des Lamellenabscheiders (L), an die kürzere Schachtwände (17) angrenzen.

9. Kläranlage nach Anspruch 8, **dadurch gekennzeichnet, dass** die Rutschfläche unter einem Winkel (β) von etwa 45° gegenüber der Vertikalen geneigt ist.

10. Kläranlage nach wenigstens einem der vorhergehenden Ansprüche, **dadurch gekennzeichnet, dass** der Lamellenabscheider (L) ein Kunststoff-Formteil und entweder einstückig oder aus aneinandergefügten Schalen ausgebildet ist, vorzugsweise mit einer zu den Schächten (15) in etwa parallelen Fügeebene (F).

11. Kläranlage nach wenigstens einem der vorhergehenden Ansprüche, **dadurch gekennzeichnet, dass** die Kläranlage (K) einen Behälter (1), insbesondere einen annähernd zylindrischen, liegend installierten Kunststoffbehälter, aufweist, der durch eine in etwa senkrechte Trennwand (2) mit oberseitiger Überlaufschwelle (6) in die Vorklärkammer (3) und nur eine Belebungskammer (4) unterteilt ist, dass der wenigstens eine Lamellenabscheider (L) in der Belebungskammer (4) an oder nahe der Trennwand (2) installiert ist, und dass in der Belebungskammer (4) im Bodenbereich und beabstandet vom Lamellenabscheider (L) dessen Einlauf (13) abgewandt wenigstens eine Belüftungseinrichtung (11) installiert ist, wobei, vorzugsweise, der Einlauf (13) des Lamellenabscheiders (L) höher positioniert ist als die Belüftungseinrichtung (11).

12. Kläranlage nach Anspruch 11, **dadurch gekennzeichnet, dass** das obere Ende (9) des Lamellenabscheiders (L) etwa auf oder geringfügig unterhalb der Höhe der Überlaufschwelle (6) liegt.

13. Kläranlage nach Anspruch 11, **dadurch gekennzeichnet, dass** das Volumen der einzigen Belebungskammer (4) ein Mehrfaches des Volumens des Lamellenabscheiders (L) ist.

14. Kläranlage nach wenigstens einem der vorhergehenden Ansprüche, **dadurch gekennzeichnet, dass** das obere Ende (9) des Lamellenabscheiders (L), das, vorzugsweise, von einem vertikalen Gehäuseabschnitt (20) des Lamellenabscheiders definiert ist, oberhalb einer Mündung (7a) des, vorzugsweise gegenüber dem Einlauf (13) gedrosselten, Auslaufs (7) im Lamellenabscheider (L) liegt, vorzugsweise mit einem Höhenabstand etwa entsprechend der zweifachen Breite (B) eines Schachtes (15).
